# EUROPEAN PATENT APPLICATION

(11) **EP 2 736 276 A1**
(43) Date of publication of application: **28.05.2014**
(21) Application number: 12194481.3
(22) Date of filing: 27.11.2012
(51) Int. Cl.: H04W 4/02, H04W 4/20, H04S 1/00, H04L 29/06, G01C 21/36, H04R 5/033, G06F 3/16, G06F 3/01, H04L 12/18

(54) **Personal communications unit for observing from a point of view and team communications system comprising multiple personal communications units for observing from a point of view**

(71) Applicant: GN Store Nord A/S, 2750 Ballerup (DK)
(72) Inventor: Jensen, Jakob, 2650 Hvidovre (DK); Mossner, Peter, 2770 Kastrup (DK); Sørensen, Peter Schou, 2500 Valby (DK); Urup, Kathrine Steen, 2500 Valby (DK); Johanson, Lars Klint, 2500 Valby (DK)
(74) Representative: Zacco Denmark A/S

(57) **Abstract**

The present invention relates to a personal communications unit for observing from a point of view and team communications system comprising multiple personal communications units for observing from a point of view; especially to a personal communications system for use in a geographical environment configured with a computational unit configured to calculate a direction and/or a distance of the elsewhere geographical position relative to the origo geographical position; and perform a transformation of the at least one record of information from the at least one elsewhere geographical position; which transformation is as if the record of information was observed from the origo geographical position.

## Description

### Field of invention

The present invention relates to a personal communications unit for observing from a point of view and a team communications system comprising multiple personal communications units for observing from a point of view; especially to a personal communications system for use in a geographical environment configured with a computational unit configured to calculate a direction and a distance of an elsewhere geographical position relative to the origo geographical position; and perform a transformation of the at least one record of information from the at least one elsewhere geographical position; which transformation is as if the record of information was observed from the origo geographical position.

### Background of the invention

Personal communications units have developed over time from being devices that merely made it possible for users to communicate with each other over a distance to communications devices, such as smart phones, also configured to provide information about current positions and retrieving data such as maps and information on points of interest on the map.

However sharing information between users navigating in a particular area or environment so far has not taken into account the relative positions of users sharing information.

### Summary

It is an object of this invention to provide units and systems that provide a solution to this problem, to improve aspects of sharing information, either geographic information, information about objects such as Points of Interests (POIs), addresses and other information that may be presented in an improved way to reflect a point of observation.

Another object of this invention is to provide units and systems that provide an improved sharing of information from different locations based on a fixed reference environment such as a standard geographical map with fixed buildings.

Yet another object of this invention is to provide units and systems that provide an improved presentation from different locations based on a relative and dynamic reference environment such as a group of people or a team moving about relative to each other with or without fixed references.

In one aspect of the invention the above and/or other objects are accomplished by a personal communications system for use in a geographical environment, the personal communication system comprising:
- an orientation unit for estimating a current orientation of a user when the user wears the orientation unit in its intended operational position;
- a geographical position unit configured to estimate an origo geographical position of the personal communications system; and
- a communications unit configured to receive at least one elsewhere geographical position, preferably from a personal communications system, and at least one record of information from the at least one elsewhere geographical position. A computational unit may be configured to provide a direction and/or a distance of the elsewhere geographical position relative to the origo geographical position and perform a transformation of the at least one record of information from the at least one elsewhere geographical position.

According to another aspect of the present invention, a personal communications system for use in a geographical environment is provided, the personal communication system comprising:
- an orientation unit for estimating a current orientation of a user when the user handles the orientation unit in its intended operational position;
- a geographical position unit configured to estimate a first position, such as a first geographical position, of the personal communications system;
- a communications unit configured to receive at least a second position, such as a second geographical position, and at least one record of information from the at least one second geographical position. The communications unit may receive the at least second position from another personal communications system. The personal communications system further comprising a computational unit configured to provide a direction to and/or a distance from the second position relative to the first position; and perform a transformation of the at least one record of information received from the at least one second position; so that the transformed at least one record of information is provided to a user of the communications system as if the record of information was observed from the first position. It is envisaged that the communications unit may be configured to receive one or more records of information from a plurality of second positions. Thus, a record of information may have one information content when viewed from a second position and another transformed information content when provided to the communications system at the first position.

The transformation is as if the record of information was observed from the origo geographical position. Thus, the transformation may transform data such as speech recorded at the elsewhere position as was the speech heard from the origo position, but transmitted clear and presented to the user in a way that reflects the direction from the origo position to the elsewhere position.

Another transformation may transform data such as a description of a face of a building from an elsewhere position to the origo position actually observing another face of the same building and in a way that reflects the direction from the origo position to the elsewhere position.

Another transformation may transform pointers or directions from a user at the elsewhere position to an object or a point of interest to pointers or directions to the same object, but pointers or directions as they are from the origo position. If a user observes the Eiffel Tower at 11 o'clock from the elsewhere position, then the transformation transforms the 11 o'clock direction to a 2 o'clock direction, which is the direction that the Eiffel Tower is as observed from the origo position.

A transform of a data observed at an elsewhere position may be transformed as was the same data observed or perceived at an origo position.

It is understood that providing a direction and/or a distance may be done by computing a vector or distance from two points, by interacting with other units to have those units calculate or look-up estimates of the direction and or distance, etc.

The origo position is equivalent to a point of view or a reference position. The elsewhere position is a position that may be anywhere or anywhere else. The origo position may be a first position and the elsewhere position may be a second position. The second position may be different from the first position. The origo position or first position may be the centre or reference position around which objects, such as other communications systems, may be positioned and the position of the objects may be described relative to the origo or reference position. Thus, the origo may be an origin for the communications system, such as an origin for a system comprising a number of communication systems. A personal communications system may have the position of a user using the personal communications system as the origo.

It is an advantage of the communications system that it may be used to communicate with other systems and present the communicated information as if the communicated information was observed at the current position of the communications system.

The communications system may place the user at the centre point of the observation and a user observing an object from a given position may receive information as if the object is observed from that given position even though the object is pointed out from another position and from that other position appearing different.

The transformation may transform the at least one record of information from the at least one elsewhere geographic position to at least one record of information providing information of the at least one elsewhere geographic position from a point of view of the origo position. The transformation may use any algorithms to perform the transformation.

In one or more embodiments a record of information may indicate the mere presence of an elsewhere position i.e. a single bit. Another record of information may comprise the coordinates of an elsewhere position.

In one or more embodiments, the invention further comprises a sound generator to output audio signals indicating the direction of and/or distance to the elsewhere geographical position and/or the record of information as transformed to the origo geographical position.

Thereby it may be made possible for the user to wear the personal communications system and continuously receive information while at the same time have the freedom to look around and use his hands. Thus, the personal communications system may allow for hands free reception of information.

In one or more embodiments the audio signal is generated in a virtual (1D, 2D or 3D) audio landscape aligned with the current orientation of the user, thereby further enabling the user in an easy and a realistic way to receive information and perceive information reflecting the environment.

In one or more embodiments each received at least one record of information from at least one elsewhere geographic position is mapped to a corresponding at least one virtual position in the virtual audio landscape and the audio signal is transformed as emitted from a virtual sound source at the virtual position.

It is an advantage that the user may hereby be provided with a virtual audio environment that takes into account a level of details as required about the real environment as observed from the current position of the user i.e. the current position of the communications system.

In one or more embodiments the strength of the emitted virtual sound source is dependent on a distance between the origo geographical position and the elsewhere geographical position.

In this way the embodiment may be able to reflect relative distances. Further embodiments may include relative importance and alarms or ping signals as certain threshold distances are crossed.

In event other embodiments the strength of the emitted virtual source relies of how well the user will be able to observe an object depending on the present location. For instance: if a line of sight is obstructed then the strength relating to this observation may fade or disappear to reflect that the object is no longer visible.

In one or more embodiments the unit is further configured to broadcast the current geographical position and/or at least one record of information.

Hence the unit may be capable of sending information that may be used as an elsewhere position. That is, the unit may be an object at the present elsewhere position and as such be observed from an origo position of another unit.

In one or more embodiments of the invention, the personal communications system is further configured to determine and select a point of interest or an address as an information record.

The unit may thereby be able to single out an object and make that object and optionally information about the object available to other units or central databases.

In one or more embodiments the personal communications system is configured to be a master system.

By master system may be understood a given level of superiority, priority, or singled out operation mode relative to other units. A master setting may include multiple levels of master modes. One master setting may only allow one master, another master setting may allow multiple masters. Yet other master settings may define an hierarchy of masters such as pier one, two, three, etc or in groups and subgroups.

A master setting may allow the unit to only broadcast and another master setting may allow the unit to both send and receive information.

Implicitly a master system has some preferences over a slave system.

In one or more embodiments the personal communications system is configured to be a slave system.

Similarly to the master setting or mode, the unit may have a slave setting or mode. Typically this mode is inferior to the master mode. Typically the slave mode may be a mode where the unit is configured to only receive information. Another slave mode may be where the unit is configured to receive information from multiple masters. Optionally the slave configuration will be allowed to send information to a master unit, but not other slave units.

A person skilled in the art will be inspired to explore different master settings, different slave settings and different master-slave settings. These settings may be implemented and by hard wiring or by soft wiring.

In one or more embodiments the geographical position unit configured to estimate an origo geographical position of the personal communications system is based on a fixed or predetermined geographical position system such as a GPS.

In this case the geographical position unit may function in a given environment that is determined by a defined and fixed reference system such as a map, a GPS, or a GIS-environment.

In one or more embodiments the system is implemented in a hearing device configured to be head worn and having at least one speaker for emission of sound towards at least one ear of a user.

It is an advantage of implementing the system in a hearing device that it further eases and integrates the personal communications unit to the user and further enables the hands free use of the system.

In one or more embodiments the geographical position unit is configured to estimate an origo geographical position of the personal communications system which may be based on a relative geographical position relative to at least one other personal communication system.

Alternatively the geographical position unit may be configured to orient relative to at least one other unit thus defining a separate reference system. This relative system may change dynamically by adding or deleting geographical position units as required.

In a particular embodiment one or more geographical position units cross-reference to a fix-point in a fixed reference system.

In one or more embodiments the system is configured as a hearing device configured to be head worn and having at least one speaker for emission of sound towards at least one ear of a user and accommodating the orientation unit for estimating a current orientation of a user's head when the user wears the hearing device in its intended operational position on the user's head.

An objective of the invention may be achieved by a set of personal communications systems comprising multiple personal communications systems as disclosed.

By having personal communications systems organised as a set with predetermined standards and configured to communicate with the same standards and protocols may provide an easy to use solution to the objectives of this invention that allow more than one person to observe an object with the benefits already emphasised. It is envisaged that in a set of personal communications systems comprising multiple personal communications systems each personal communications system may act as origo or reference for the personal communications system in question.

In one or more embodiments of the set one personal communications may be a master system and at least one personal communications system maybe a slave system.

Thereby the set may have a predetermined order of the set that enables the group of users to have a leader or most preferred person to select the points of interests.

In one or more embodiments of the set, the personal communications systems are configured to change master system according to either a selection process or a predetermined procedure, such as based on an ordered list.

This will allow the system to function if one master falls out due to whatever reason. The insertion of new masters as a unit emerge or re-emerge may be implemented in a similar way.

In one or more embodiments of the set, a master system is configured to sound an alarm when a slave system is at or arrives at a predetermined geographical position or exceeds a predetermined distance threshold between the master system and the slave system.

This may be particularly useful when a first user approaches an object and perhaps calls other users to attend to the object. As individual users approach the object the first user may be notified.

In one or more embodiments of the set, the personal communications systems are grouped in at least two groups; each group having at least one master personal communications system.

This may allow users to split up in groups and sub-groups that may operate individually or dependently.

In one or more embodiments of the set, the computational unit is configured to collect and process data (geographical positions and record of information) received from elsewhere geographic positions and to process these data to create at least one new record of information and broadcast the at least one new record of information.

This may allow for collective and effective collection of information about an object. An object may be observed from one or more positions and information from each position may be compiled as one record of information characterising that object.

In an alternative implementation, at least a part of the computational unit may be located external to, or remote from, the personal communications system; such as a central server.

This may reduce the need for computational power in each device. A remote or separate computational unit may also ease the continued updating of the algorithms used to perform the transformation.

It is understood that each communications unit may be configured to communicate positions to the remote computational unit and to receive and process the transformed information.

In another aspect, one or more objectives of the invention may be achieved by a method of sharing information about a point of interest or an address using at least two personal communications systems as disclosed, the method comprising the steps of:
a first personal communications system acquiring a first current position and at least one record of information; a second personal communication system acquiring a second current position
Communicating the first current position and at least one record of information between the first and second personal communications systems
transforming the observation of the at least one record of information observed from the first current position to be as observed from the second current position
sounding an output audio signal about the at least one record of information as observed from the second current position.

It is an advantage that a general way may be provided to achieve one or more objectives of the invention and that it may be implemented in equipment as found available and suitable.

In a further aspect, one or more objectives may be achieved by a method of sharing information about a point of interest or an address using at least two personal communications systems as disclosed, the method comprising the steps of:
a first personal communications system acquiring a first current position and at least one record of information; a second personal communication system acquiring a second current position;
communicating the positions and at least one record of information to a remote computer;
transforming the observation of the at least one record of information observed from the first current position to be as observed from the second current position;
communicating the transformed observation to at least one personal communications system; and
sounding an output audio signal about the at least one record of information as observed from the second current position.

It is an advantage of the method that personal units may collect and present data or information and wherein more complex and common tasks may be computed centrally. Thus hereby providing a system that is simple and easy to maintain or update to comprise for example more complex procedures and/or algorithms to perform transformations.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

### Brief Description of Drawings

Embodiments of the invention will be described in the figures, whereon:
Fig. 1 defines an origo geographical position or a point of view and elsewhere geographical position;
Fig. 2 illustrates the orientation of a user and a line of interest;
Fig. 3 shows personal guide system implemented as a hearing device with an inertial orientation unit,
Fig. 4 illustrates a schematic of a personal guide unit;
Fig. 5 illustrates an environment with databases/archives with which a personal communications system operates and interacts with;
Fig. 6 illustrates a set of personal communications systems - in a one master/ multiple slave configuration - observing and object from different points of views or origos; and
Fig. 7 illustrates a set of personal communications system - in a multiple slave/ one master configuration - where multiple slaves collects and sends information about an object form different points of observations to a master.

### Detailed Description

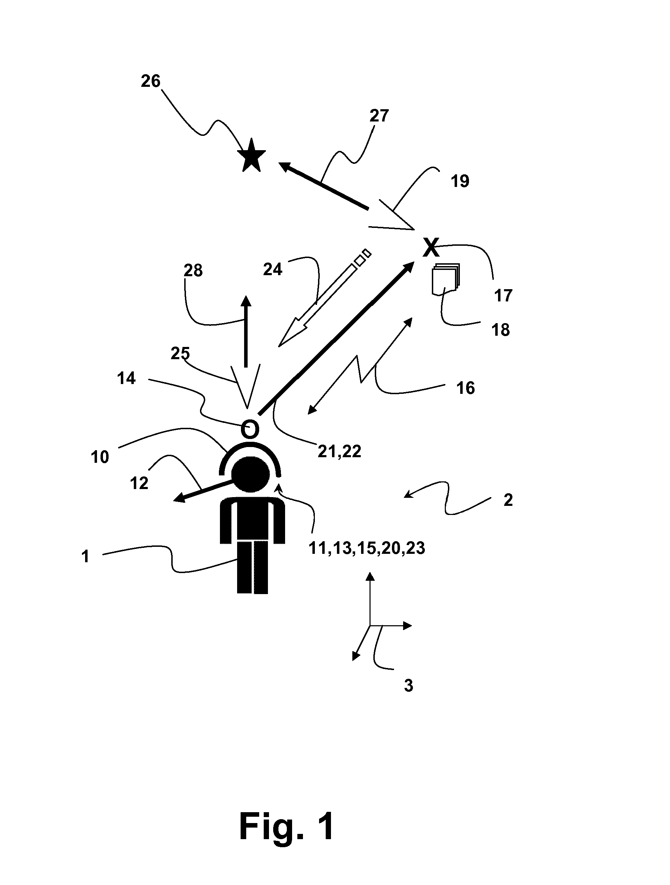

Fig. 1 shows a user 1 in a geographical or spatial environment 2 having coordinates 3. In this case the user wears a personal communications system 10 with an orientation unit 11 for estimating a current orientation 12 of the user, who in this case wears the personal communications system 10 on his head and the orientation 12 is understood to be the direction that the nose of the user points to.

There is a geographical position system unit 13 in the personal communications system 10 that is configured to determine an origo geographical position 14 of the personal communication system 10.

The personal communications unit 10 further has a communications unit 15 configured to receive 16, here in the form of a wireless signal, at least one elsewhere geographical position 17, preferably from a personal communications system at that elsewhere geographical position 17, and at least one record of information 18 as observed 19 from the at least one elsewhere geographical position 17.

There is a computational unit 20 configured to calculate a direction 21 and/or a distance 22 of the elsewhere geographical position 17 relative to the origo geographical position 14; and controlling a sound generator 23 to output audio signals as a transformation 24 of the at least one record of information 18 from the at least one elsewhere geographical position 17; which transformation 24 is as if the record of information 18 was observed 25 from the origo geographical position 14.

In this particular case the observation 19 is of an object 26 in the elsewhere direction 27. The transformation 24 transforms the elsewhere direction 27 to an origo direction 28, i.e. the direction for the user 1 to look into to observe the object 26.

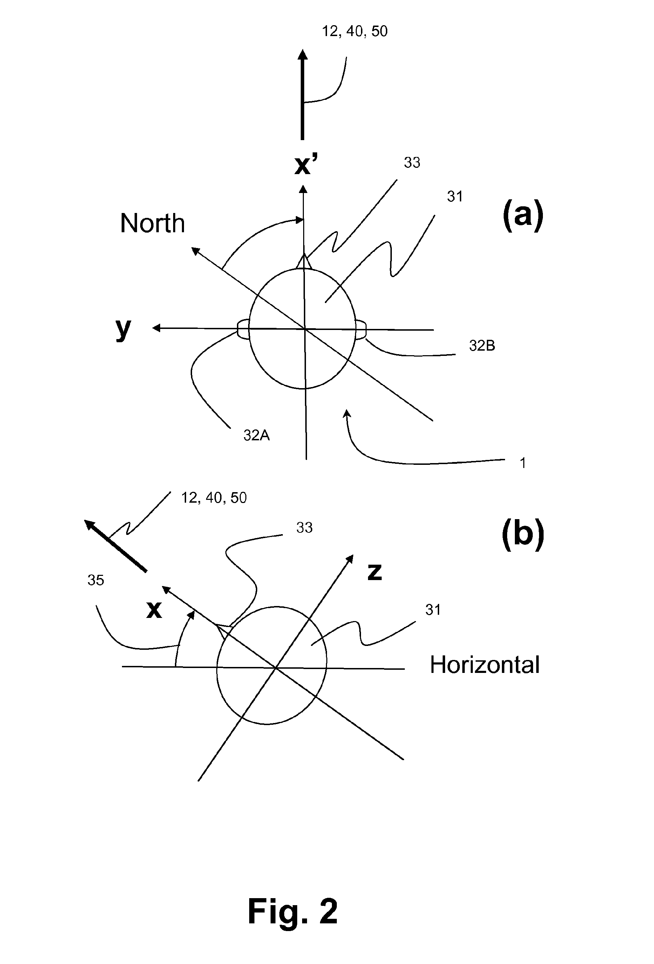

Fig. 2(a) shows a head reference coordinate system that is defined with its centre located at the centre of the user's 1 head 31, which is defined as the midpoint of a line drawn between the respective centres of the eardrums (not shown) of the left and right ears 32A, 32B of the user.

The x-axis of the head reference coordinate system is pointing ahead through a centre of the nose 33 of the user, its y-axis is pointing towards the left ear 32A through the centre of the left eardrum (not shown), and its z-axis is pointing upwards as is seen in figure 2(b) that illustrates the definition of head pitch 35. Head pitch 35 is the angle between the current x-axis and the horizontal plane.

From fig. 2(a) a definition of head yaw may be derived, where head yaw is the angle between the current x-axis' projection x' onto a horizontal plane at the location of the user 1, and a horizontal reference direction, such as Magnetic North or True North.

Finally a definition of head roll may be derived as the angle between the y-axis and the horizontal plane.

In figure 2(a) the line of interest 50 is aligned with the line of sight 40 and the orientation of the user 1 i.e. the direction of the nose 33.

It is noted that changing coordinate systems and aligning the coordinates is a matter of simple geometrical transformations readily available to the person skilled in the art. Likewise placing a headset on the user 1 in an intended way will give a starting point of defining an orientation 12 of a user 1 and thus a line of sight 40 and then for this embodiment define one line of interest 50.

Furthermore it is noted that another choice of coordinates may be made. One such choice may be polar coordinates; and the person skilled in the art will appreciate the transforming amongst such coordinate systems.

The orientation 12 of the head of the user 1 is defined as the orientation of a head reference coordinate system with relation to a reference coordinate system with a vertical axis and two horizontal axes at the current location of the user. Basically and essentially, the direction of the nose of the user defines a viewing direction 40 and may be a starting direction, if not the preferred, of a line of interest 50.For the sake of simplicity, the line of interest 50 is hereinafter a straight line in the direction of the nose of the user 1 and the orientation 12 as the orientation unit 11 is worn by the user 1 as intended.

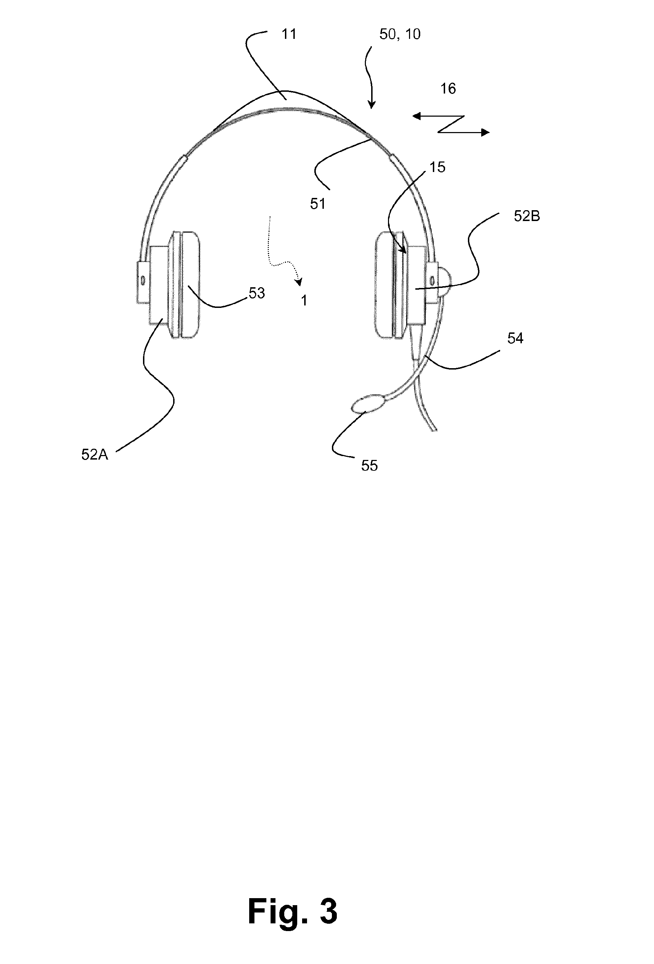

Fig. 3 shows an exemplary hearing device 50 of the personal communications system 10, having a headband 51 carrying two earphones 52A, 52B similar to a conventional corded headset with two earphones interconnected by a headband.

Each earphone 52A, 52B of the illustrated hearing device 50 comprises an ear pad 53 for enhancing the user comfort and blocking out ambient sounds during listening or two-way communication.

A microphone boom 54 with a voice microphone 55 at the free end extends from an earphone 52B. The microphone 55 is used for picking up the user's voice e.g. during two-way communication via a mobile phone network and/or for reception of user commands to the personal navigation system 1.

The personal communications system 10 presented as a hearing device 50 has a communications system 15 for communication 16 with external devices. This may be a Bluetooth link 15 or alike. A Bluetooth transceiver in the earphone may be wirelessly connected by a Bluetooth link 16 to a Bluetooth transceiver a hand-held device (not shown).

A similar hearing device 50 may be provided without the microphone boom, whereby the microphone is provided in a housing on the cord as is well-known from prior art headsets.

An inertial measurement unit or orientation unit 11 is accommodated in a housing mounted on or integrated with the headband 51 and interconnected with components in the earphone housing through wires running internally in the headband 51 between the orientation unit 11 and the earphone 52.

The user interface of the hearing device 50 is not visible, but may include one or more push buttons, and/or one or more dials as is well-known from conventional headsets.

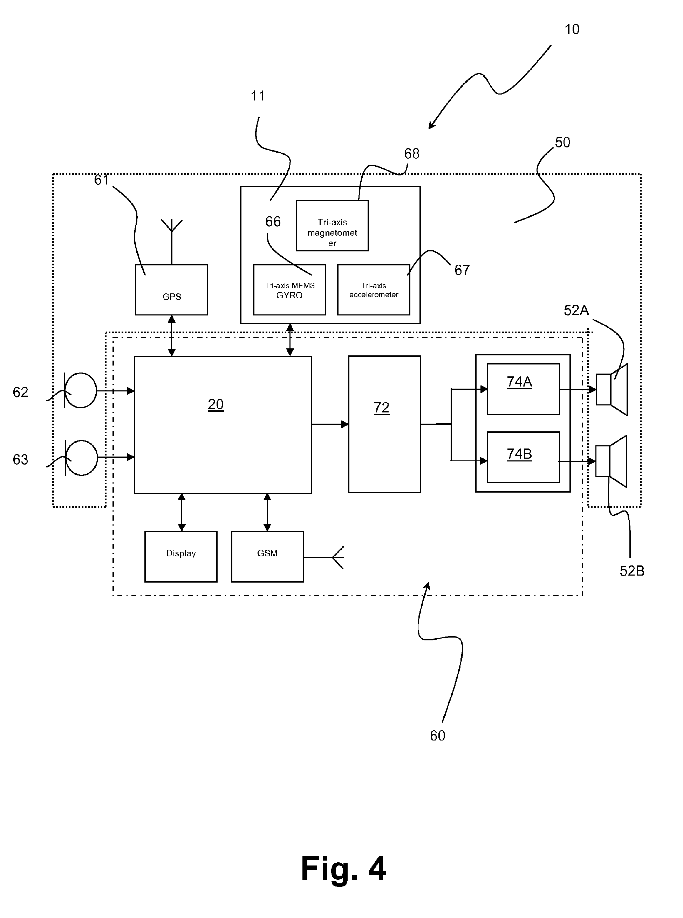

Fig. 4 shows a block diagram of a personal communications system 10 comprising a hearing device 50 and a hand-held device 60.

The various components of the system may be distributed otherwise between the hearing device 50 and the hand-held device 60. For example, the hand-held device 60 may accommodate the GPS-receiver 61.

Another system 10 may not have a hand-held device 60 so that all the components of the system are accommodated in the hearing device 50. The system without a hand-held device 60 does not have a display, and speech synthesis is used to issue messages and instructions to the user and speech recognition is used to receive spoken commands from the user.

The illustrated personal communications system 10 comprises a hearing device 50 comprising electronic components including two loudspeakers 52A, 52B for emission of sound towards the ears of the user 1 (not shown), when the hearing device 50 is worn by the user 1 in its intended operational position on the user's 1 head 31.

It should be noted that in addition to the hearing device 50 shown in Fig, 3, the hearing device 50 may be of any known type including an Ear-Hook, In-Ear, On-Ear, Over-the-Ear, Behind-the-Neck, Helmet, Headguard, etc, headset, headphone, earphone, ear defenders, earmuffs, etc.

Further, the hearing device 10 may be a binaural hearing aid, such as a BTE, a RIE, an ITE, an ITC, a CIC, etc, binaural hearing aid.

The illustrated hearing device 50 has a voice microphone 62 e.g. accommodated in an earphone housing or provided at the free end of a microphone boom mounted to an earphone housing.

The hearing device 50 further has one or two ambient microphones 63, e.g. at each ear, for picking up ambient sounds.

The hearing device 50 has an orientation unit 11 positioned for determining head yaw, head pitch, and/or head roll, when the user wears the hearing device 50 in its intended operational position on the user's head.

The illustrated orientation unit 11 has tri-axis MEMS gyros 66 that provide information on head yaw, head pitch, and head roll in addition to tri-axis accelerometers 67 that provide information on three dimensional displacement of the hearing device 50.

The hearing device 50 also has a location unit or a geographical position system unit, which in this case is a GPS-unit 61 for determining the geographical position of the user, when the user wears the hearing device 50 in its intended operational position on the head, based on satellite signals in the well-known way. Hereby, the user's current position or the origo position 14 and orientation 12 may be provided to the user based on data from the hearing device 50.

Optionally, the hearing device 50 accommodates a GPS-antenna configured for reception of GPS-signals, whereby reception of GPS-signals is improved in particular in urban areas where, presently, reception of GPS-signals may be difficult.

In a hearing device 50 without the GPS-unit 61, the hearing device 50 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units may be difficult.

The illustrated orientation unit 11 also has a magnetic compass in the form of a tri-axis magnetometer 68 facilitating determination of head yaw with relation to the magnetic field of the earth, e.g. with relation to Magnetic North.

The hand-held device 60 of the personal communications system 10 has a computational unit 20 or a separate processor unit with input/output ports connected to the sensors of the orientation unit 11, and configured for determining and outputting values for head yaw, head pitch, and head roll, when the user wears the hearing device 50 in its intended operational position on the user's head.

The computational unit 20 may further have inputs connected to accelerometers of the orientation unit 11, and configured for determining and outputting values for displacement in one, two or three dimensions of the user when the user wears the hearing device 50 in its intended operational position on the user's head, for example to be used for dead reckoning in the event that GPS-signals are lost.

Thus, the illustrated personal navigation system 10 is equipped with a complete attitude heading reference system (AHRS) for determination of the orientation of the user's head that has MEMS gyroscopes, accelerometers and magnetometers on all three axes. The computational unit provides digital values of the head yaw, head pitch, and head roll based on the sensor data.

The hearing device 50 has a data interface for transmission of data from the orientation unit 11 to the computational unit 20 of the hand-held device 60, e.g. a smart phone with corresponding data interface. The data interface may be a Bluetooth Low Energy interface.

The hearing device 50 further has a conventional wired audio interface for audio signals from the voice microphone 62, and for audio signals to the loudspeakers 52A, 52B for interconnection with the hand-held device 60 with corresponding audio interface.

This combination of a low power wireless interface for data communication and a wired interface for audio signals provides a superior combination of high quality sound reproduction and low power consumption of the personal communications system 10.

The hearing device 50 has a user interface (not shown), e.g. with push buttons and dials as is well-known from conventional headsets, for user control and adjustment of the hearing device 50 and possibly the hand-held device 60 interconnected with the hearing device 12, e.g. for selection of media to be played.

The hand-held device 50 receives head yaw from the orientation unit 11 of the hearing device 10 through the wireless interface 16. With this information, the hand-held device 50 may display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 60 to input information on a geographical position the user desires to visit in a way well-known from prior art hand-held GPS-units.

The hand-held device 60 may display maps with a suggested route to the desired geographical destination as a supplement to the aural guidance provided through the hearing device 50.

The hand-held device 60 may further transmit spoken guiding instructions to the hearing device 50 through the audio interfaces is well-known in the art, supplementing the other audio signals provided to the hearing device 50.

In addition, the microphone of hearing device 50 may be used for reception of spoken commands by the user, and the computational unit 20 may be configured for speech recognition, i.e. decoding of the spoken commands, and for controlling the personal communications system 10 to perform actions defined by respective spoken commands.

The hand-held device 60 filters the output of a sound generator 72 of the hand-held device 60 with a pair of filters 74A, 74B with an HRTF into two output audio signals, one for the left ear and one for the right ear, corresponding to the filtering of the HRTF of a direction in which the user should travel in order to visit a desired geographical destination.

This filtering process causes sound reproduced by the hearing device 50 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the personal communications system 1.

The sound generator 72 may output audio signals representing any type of sound suitable for this purpose, such as speech, e.g. from an audio book, radio, etc, music, tone sequences, etc.

The user may for example decide to listen to a radio station while walking, and the sound generator 72 generates audio signals reproducing the signals originating from the desired radio station filtered by pair of filters 74A, 74B with the HRTFs in question, so that the user perceives to hear the desired music from the direction towards the desired geographical destination to be visited at some point in time.

At some point in time, the user may decide to follow a certain route determined and suggested by the personal navigation system 10, and in this case the processor controls the HRTF filters so that the audio signals from the sound generator 24 are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

In the event that the computational unit controls the sound generator 72 to output a tone sequence the frequency of the tones may be increased or decreased with distance to the desired geographical destination. Alternatively, or additionally, the repetition rate of the tones may be increased or decreased with distance to the desired geographical destination.

The personal communications system 10 may be operated without using the visual display, i.e. without the user consulting displayed maps, rather the user specifies desired geographical destinations with spoken commands and receives aural guidance by sound emitted by the hearing device 50 in such a way that the sound is perceived by the user as coming from the direction towards the desired geographical destination.

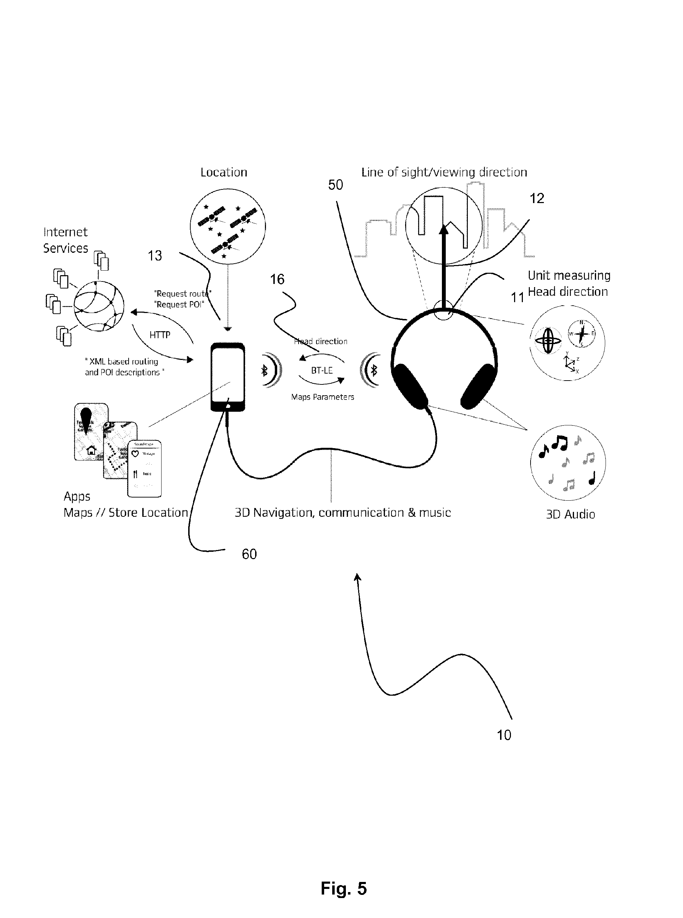

Fig. 5 illustrates a configuration and operation of an example of the personal communications system 10 shown in Fig. 4, with the hearing device 50 together with a hand-held device 60, which in the illustrated example is a smart phone, with a personal navigation app containing instructions for the processor or computational unit of the smart phone to perform the operations of the computational unit 20 of the personal communications system 10 and of the pair of filters 74A, 74B, with an HRTF. The hearing device 50 is connected to the smart phone 60 with a chord providing a wired audio interface between the two units 10, 60 for transmission of speech and music from the smart phone 60 to the hearing device 10, and speech from the voice microphone (not shown) to the smart phone 60 as is well-known in the art.

As indicated in Fig. 5 by the various exemplary GPS-images displayed on the smart phone 60 display, the personal navigation app is executed by the smart phone in addition to other tasks that the user selects to be performed simultaneously by the smart phone 60, such as playing music, and performing telephone calls when required.

The personal navigation app configures the smart phone 60 for data communication with the hearing device 50 through a Bluetooth Low Energy wireless interface 16 available in the smart phone 60 and the hearing device 50, e.g. for reception of head yaw from the orientation unit 11 of the hearing device 50. In this way, the personal navigation app may control display of maps on the display of the smart phone 60 in accordance with orientation of the head of the user as projected onto a horizontal plane, i.e. typically corresponding to the plane of the map. For example, the map may be displayed with the position of the user at a central position of the display, and the head x-axis pointing upwards.

During navigation, the personal communications system 10 operates to position a virtual sonar beacon at a desired geographical location, whereby a guiding sound signal is transmitted to the ears of the user that is perceived by the user to arrive from a certain direction in which the user should travel in order to visit the desired geographical location. The guiding sound is generated by a sound generator 72 of the smart phone 60, and the output of the sound generator 72 is filtered in parallel with the pair of filters 74A, 74B of the smart phone 60 having an HRTF so that an audio signal for the left ear and an audio signal for the right ear are generated. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

At any time during use of the personal navigation system, the user may use the user interface to request a spoken presentation of a an address with an address record located along the line of interest which in this case is the field of view or line of sight of the user, e.g. by pushing a specific button located at the hearing device 10 as will be exemplified in the following figures.

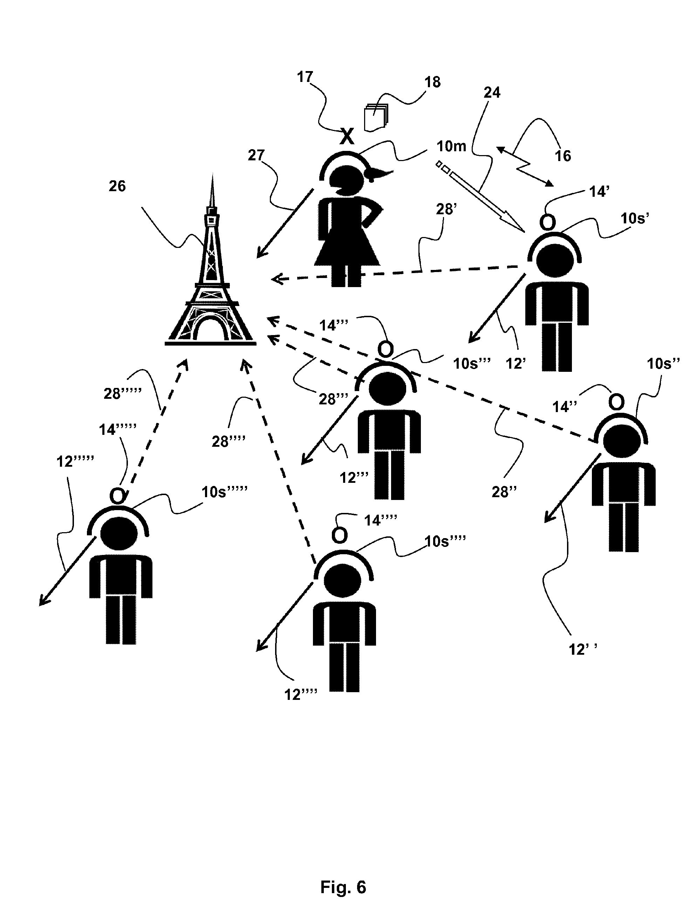

Fig. 6 exemplifies a use of multiple personal communications systems 10 interlinked or interconnected by use of their communications units 15 communicating 16 amongst each other as required thus functioning as a set of personal communications system 100. In this particular set there is one master system 10m and multiple slave system 10s.

In this example, a team is in the vicinity of a point of interest in this case an object 26 such as the Eiffel Tower. The team has a team leader wearing a personal communications system 10 configured as a master 10m. The team leader is currently at a geographical position X observing the object 26 from an elsewhere direction 27. Normally communicating 16 this elsewhere direction 27 to team members will prompt each member to look in the direction or orientation 12', 12", ..., respectively, to observe the object 26. As is clearly seen from the figure this is not the correct direction since each team member has his own position.

Rather, according to the invention each personal communications system 10s', 10s", ... located at the origo position 14', 14", ... will have transformed 24', 24", ... the elsewhere direction 27 to a an origo direction 28', 28", ... pointing in the direction of the object 26 as if the point of view was from the origo position 14.

In a similar way a record of information 18 about the object 26 may depend on from which direction the object is observed.

For example the team leader may want the team to enter a building such as the object 26. Whilst observing the building from one side and with a record of information in the form of images like from Google Earth or Street view or any other GIS-archive the personal communications system 10s""' located at the geographical position 14""' will transform 24""' the record of information 18 as observed 25""' from the origo position 14""' of the team member carrying the personal communication system in the slave mode 10s""'.

In one case, the information record 18 about the object 26 contains information as observed from some or all (say 360-degrees) directions and the transformation 24 is carried out so as to select the appropriate information according to a particular point of view 25.

In another case, the information record 18 about the object 26 is available, but stored remotely. In this case the transformation 24 retrieves the required information according to the particular point of view 25.

In some cases, the transformation 24 includes interpolation of multiple pieces of information from different points of observations thereby providing a best estimate of appropriate information from origo position 14.

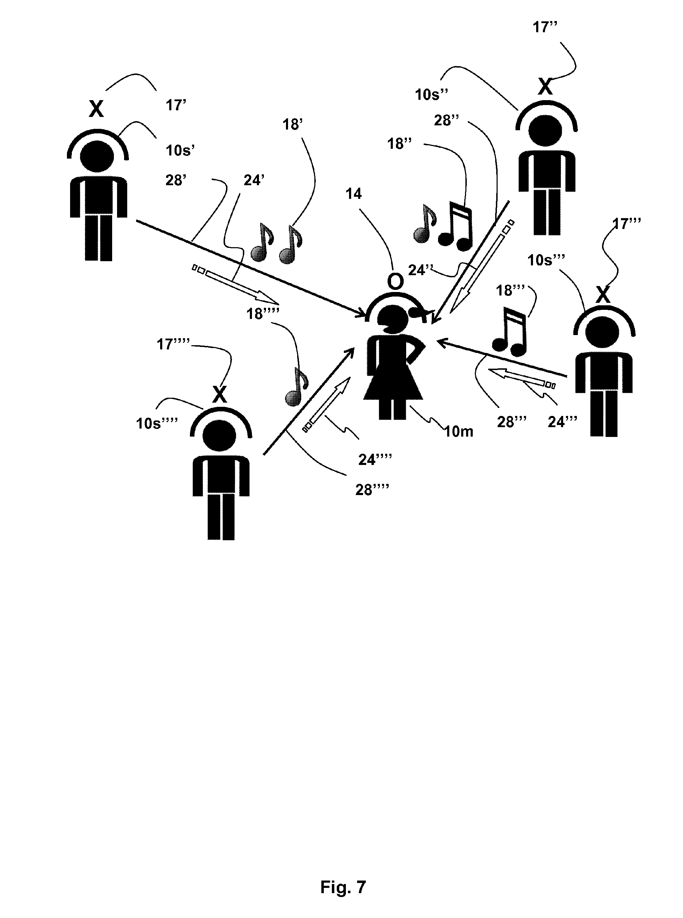

Fig. 7 illustrates the use of a set of personal communications systems with one master 10m and multiple slaves 10s', 10s", ....

The master personal communications system 10m is located at an origo position 14 and receives information from slave personal communications systems 10s', 10s", ... thus receiving records of information 18', 18", ... from different elsewhere geographical positions 17', 17" and elsewhere directions 28', 28", .. and transformed 24', 24", ... as was they observed from the origo geographical position 14, which transformation 24 is an adjustment in volume, for example, to reflect the relative distances between the users carrying the master units and the user carrying the slave unit.

Other transformations 24 may be equalised to reflect the echoes of the surroundings. Yet other transformations 24 may assign a particular signature to each personal communications system 10s.

In this embodiment a distinctive tone 18', 18",... is assigned to each slave system 10s', 10s", ... so that the master 10m may recognise or identify each user at an elsewhere position 17', 17",... .

Hence this simple implementation is when the record of information 18 is a single signature such as a tone assigned to all units thereby merely indicating an active presence of the unit.

The audio signal generated is embedded in a virtual (1D, 2D or 3D) audio landscape aligned with the current orientation of the user.

## Claims

1. A personal communications system for use in a geographical environment, the personal communication system comprising:
- an orientation unit for estimating a current orientation of a user when the user handles the orientation unit in its intended operational position;
- a geographical position unit configured to estimate an origo geographical position of the personal communications system;
- a communications unit configured to receive at least one elsewhere geographical position, preferably from a personal communications system, and at least one record of information from the at least one elsewhere geographical position;
- a computational unit configured to provide a direction and/or a distance of the elsewhere geographical position relative to the origo geographical position; and perform a transformation of the at least one record of information from the at least one elsewhere geographical position; which transformation is as if the record of information was observed from the origo geographical position.

2. A personal communications system according to claim 1 further comprising a sound generator to output audio signals about the direction and/or distance of the elsewhere geographical position and/or the record of information as transformed to the origo geographical position.

3. A personal communications system according to claim 2, wherein the audio signal is generated in a virtual (1D, 2D or 3D) audio landscape aligned with the current orientation of the user.

4. A personal communications system according any of to claim 1 to claim 3, wherein each received at least one record of information from at least one elsewhere geographic position is mapped to a corresponding at least one virtual position in the virtual audio landscape and the audio signal is transformed as emitted from a virtual sound source at the virtual position.

5. A personal communication system according to any of claim 1 to claim 4, wherein the strength of the emitted virtual sound source is dependent on a distance between the origo geographical position the elsewhere geographical position.

6. A personal communications system according to any of claim 1 to claim 5 further configured to broadcast the current geographical position and/or at least one record of information.

7. A personal communication system according to any of claim 1 to claim 6, wherein the personal communications system further is configured to determine and select a point of interest or an address as an information record.

8. A personal communications system according to any of claim 1 to claim 7, wherein the personal communications system is configured to be a master system.

9. A personal communications system according to any of claim 1 to claim 8, wherein the personal communications system is configured to be a slave system.

10. A personal communication system according to any of claim 1 to claim 9, wherein the geographical position unit configured to estimate an origo geographical position of the personal communications system is based on a predetermined geographical position system such as a GPS.

11. A personal communications system according to any of claim 1 to claim 10, wherein the system is implemented in a hearing device configured to be head worn and having at least one speaker for emission of sound towards at least one ear of a user.

12. A personal communication system according to any of claim 1 to claim 11, wherein the geographical position unit is configured to estimate an origo geographical position of the personal communications system that is based on an a relative geographical position relative to at least one other personal communication system.

13. A personal communications system according to any of claim 1 to claim 12 and configured as a hearing device configured to be head worn and having at least one speaker for emission of sound towards at least one ear of a user and accommodating the orientation unit for estimating a current orientation of a user's head when the user wears the hearing device in its intended operational position on the user's head.

14. A set of personal communications systems comprising multiple personal communications systems according to claims 1 to 13.

15. A set of personal communications systems according to claim 14, wherein one personal communications is a master system and at least one personal communications system is a slave system.

16. A set of personal communications system according to clam 15, wherein the personal communications systems are configured to change master system according to either a selection process or a predetermined procedure most preferably based on an ordered list.

17. A set of personal communications systems according to claim 15 or claim 16, wherein a master system is configured to sound an alarm when a slave system is at a predetermined geographical position or exceeds a predetermined distance threshold between the master system and the slave system.

18. A set of personal communications systems according to any of claim 14 to claim 17, wherein the personal communications systems are grouped in at least two groups; each group having at least one master personal communications system.

19. A set of personal communications systems according to any of claim 14 to claim 18, where in the computational unit is configured to collect and process data (geographical positions and record of information) received from elsewhere geographic positions and to process these data to create at least one new record of information and broadcast the at least one new record of information.

20. A set of personal communications systems according to any of claim 14 to claim 19, wherein at least a part of the computational unit is located external to or remote from the personal communications system; such as a central server.

21. A method of sharing information about a point of interest or an address using at least two personal communications systems according to any of claim 1 to claim 20, the method comprising the steps of:
a first personal communications system acquiring a first current position and at least one record of information; a second personal communication system acquiring a second current position
communicating the first current position and the at least one record of information between the first and second personal communications systems
transforming the observation of the at least one record of information observed from the first current position to be as observed from the second current position
sounding an output audio signal about the at least one record of information as observed from the second current position.

22. A method of sharing information about a point of interest or an address using at least two personal communications systems according to any of claim 1 to claim 20, the method comprising the steps of:
a first personal communications system acquiring a first current position and at least one record of information; a second personal communication system acquiring a second current position;
communicating the positions and the at least one record of information to a remote computer;
transforming the observation of the at least one record of information observed from the first current position to be as observed from the second current position;
communicating the transformed observation to at least one personal communications system; and
sounding an output audio signal about the at least one record of information as observed from the second current position.
